# EUROPEAN PATENT APPLICATION

(11) **EP 4 597 947 A1**
(43) Date of publication of application: **06.08.2025**
(21) Application number: 22959914.7
(22) Date of filing: 28.09.2022
(51) Int. Cl.: H04L 27/00, H04W 52/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Mewburn Ellis LLP
(86) International application number: PCT/CN2022/122109
(87) International publication number: WO 2024/065267

(57) **Abstract**

A wireless communication method and a device, the method includes: transmitting, by a second device, first request information to the first device, where the first request information is used for requesting the first device to transmit a target signal, and the target signal is used for the second device to perform power harvesting and/or for the second device to perform back scattering.

## Description

### TECHNICAL FIELD

The embodiments of the present application relate to the field of communications, and in particular, to a wireless communication method and a device.

### BACKGROUND

In zero-power consumption communication, zero-power consumption devices need to harvest power for driving themselves to work, so as to perform data transmission, and the zero-power consumption devices need to use carrier signals for back scattering, so as to perform the data transmission. Therefore, the problem of how to provide power for zero-power consumption devices and/or provide carrier signals for the power zero-power consumption devices to ensure data transmission of the zero-power consumption devices urgently needs to be solved.

### SUMMARY

The present application provides a wireless communication method and a device, which are beneficial to ensuring a power supply requirement and/or a carrier requirement of the zero-power consumption device.

In a first aspect, a wireless communication method is provided, and the method includes: transmitting, by a first device, a first signal to a second device, where the first signal is used for the second device to perform power harvesting and/or for the second device to perform back scattering, and the first signal is a signal predetermined to be transmitted.

In a second aspect, a wireless communication method is provided, and the method includes: receiving, by a second device, a first signal transmitted by a first device, where the first signal is used for the second device to perform power harvesting and/or for the second device to perform back scattering, and the first signal is a signal predetermined to be transmitted.

In a third aspect, a wireless communication method is provided, and the method includes: transmitting, by a second device, first request information to a first device, where the first request information is used for requesting the first device to transmit a target signal, and the target signal is used for the second device to perform power harvesting and/or for the second device to perform back scattering.

In a fourth aspect, a wireless communication method is provided, and the method: receiving, by a first device, first request information transmitted by a second device, where the first request information is used for requesting the first device to transmit a target signal, and the target signal is used for the second device to perform power harvesting and/or for the second device to perform back scattering.

In a fifth aspect, a communication device is provided, and the communication device is configured to perform the method in any one of the first to fourth aspects described above or various implementations thereof. Specifically, the terminal device includes a functional module configured to perform the method in any one of the first to fourth aspects described above or various implementations thereof.

In a sixth aspect, a communication device is provided, and the communication device includes a processor and a memory. The memory is configured to store a computer program, and the processor is configured to invoke and run the computer program stored in the memory, so as to enable the communication device to perform the method in any one of the first to fourth aspects described above or various implementations thereof.

In a seventh aspect, a chip is provided, and the chip is used to implement the method in any one of the first to fourth aspects described above or various implementations thereof. Specifically, the chip includes a processor configured to invoke and run a computer program from a memory, to enable a device equipped with the chip to perform the method in any one of the first to fourth aspects described above or various implementations thereof.

In an eighth aspect, a computer-readable storage medium is provided, the computer-readable storage medium is configured to store a computer program, and the computer program enables a computer to perform the method in any one of the first to fourth aspects described above or various implementations thereof.

In a ninth aspect, a computer program product is provided, the computer program product includes computer program instructions, and the computer program instructions enable a computer to perform the method in any one of the first to fourth aspects described above or various implementations thereof.

In a tenth aspect, a computer program is provided, and the computer program, when run on a computer, enables the computer to perform the method in any one of the first to fourth aspects described above or various implementations thereof.

Through the above technical solutions, the first device may transmit the first signal to the second device, the first signal is a signal predetermined to be transmitted, and the first signal may be used to provide a basic power supply signal and/or carrier signal for the second device, which is beneficial to ensuring a basic power requirement and/or carrier requirement of the second device.

### BRIEF DESCRIPTION OF THE DRAWINGS

FIG. 1 is a schematic diagram of a communication system architecture according to embodiments of the present application.
FIG. 2 is a schematic diagram of a zero-power consumption communication system according to an example of the present application.
FIG. 3 is a diagram showing a principle of power harvesting according to an embodiment of the present application.
FIG. 4 is a diagram showing a principle of back scattering communication according to an embodiment of the present application.
FIG. 5 is a circuit diagram showing a principle of resistance load modulation according to an embodiment of the present application.
FIG. 6 is a schematic diagram of a frame format composition of a PPDU frame.
FIG. 7 is a schematic diagram of a frame format of a PPDU frame.
FIG. 8 is a schematic diagram of a format of a frame control field of a PPDU frame.
FIG. 9 is a schematic diagram showing interaction of a wireless communication method according to embodiments of the present application.
FIG. 10 is a schematic diagram of a power supply device transmitting a power supply signal based on spatial information according to an authorized embodiment.
FIG. 11 is a schematic diagram of a format of a frame carrying power supply requirement information according to embodiments of the present application.
FIG. 12 is a schematic diagram of data transmission performed by a zero-power consumption device according to embodiments of the present application.
FIG. 13 is a schematic diagram showing interaction of another wireless communication method according to embodiments of the present application.
FIG. 14 is a schematic block diagram of a communication device according to embodiments of the present application.
FIG. 15 is a schematic block diagram of another communication device according to embodiments of the present application.
FIG. 16 is a schematic block diagram of yet another communication device according to embodiments of the present application.
FIG. 17 is a schematic block diagram of yet another communication device according to embodiments of the present application.
FIG. 18 is a schematic block diagram of yet another communication device according to embodiments of the present application.
FIG. 19 is a schematic block diagram of a chip according to embodiments of the present application.
FIG. 20 is a schematic block diagram of a communication system according to embodiments of the present application.

### DETAILED DESCRIPTION

Technical solutions in the embodiments of the present application will be described below with reference to the accompanying drawings of the embodiments of the present application. Obviously, the described embodiments are merely some but not all of the embodiments of the present application. All other embodiments obtained based on the embodiments of the present application by those ordinary skilled in the art without paying creative efforts shall fall within the protection scope of the present application.

The technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (NTN) system, a universal mobile telecommunication system (UMTS), a wireless local area network (WLAN) system, a wireless fidelity (WiFi) system, a 5th-generation (5G) communication system, a cellular Internet of Things (IoT) system, a cellular passive IoT system, and other communication systems.

Generally speaking, the limited number of connections is supported by traditional communication systems and is easy to implement. However, with the development of the communication technology, mobile communication systems will not only support the traditional communication, but also support, for example, device to device (D2D) communication, machine to machine (M2M) communication, machine type communication (MTC), vehicle to vehicle (V2V) communication, or vehicle to everything (V2X) communication, and the embodiments of the present application may also be applied to these communication systems.

Optionally, the communication system in the embodiments of the present application may be applied to a carrier aggregation (CA) scenario, a dual connectivity (DC) scenario, or a standalone (SA) networking scenario.

Optionally, the communication system in the embodiments of the present application may be applied to an unlicensed spectrum, and the unlicensed spectrum may also be considered as a shared spectrum; or the communication system in the embodiments of the present application may be applied to a licensed spectrum, and the licensed spectrum may also be considered as an unshared spectrum.

Various embodiments of the present application are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, or a user apparatus.

In the embodiments of the present application, the network device may be a device used for communicating with a mobile device. The network device may be an access point (AP) in WLAN, a base transceiver station (BTS) in GSM or CDMA, or a base station (NodeB, NB) in WCDMA; or the network device may be an evolutional Node B (eNB or eNodeB) in LTE, a relay station or access point, a network device (gNB) in a vehicle-mounted device, a wearable device or an NR network, a network device in a cellular Internet of Things, a network device in a cellular passive Internet of Things, a network device in a future evolved public land mobile network (PLMN), or a network device in an NTN network.

As an example but not as a limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. Optionally, the network device may also be a base station provided on land, water, and other places.

In the embodiments of the present application, the network device may provide services for a cell, and the terminal device communicates with the network device through a transmission resource (e.g., a frequency domain resource, or a spectrum resource) used by the cell. The cell may be a cell corresponding to the network device (e.g., the base station). The cell may belong to a macro base station, or belong to a base station corresponding to small cells. Here, the small cells may include: a metro cell, a micro cell, a pico cell, a femto cell, etc. These small cells have characteristics of small coverage and low transmission power, and are suitable for providing high-speed data transmission services.

The terminal device may be a station (STA) in WLAN, or may be a cellular phone, a cordless phone, a session initiation protocol (SIP) phone, a wireless local loop (WLL) station, a personal digital assistant (PDA) device, a handheld device with a wireless communication function, a computing device or any other processing device connected to a wireless modem, a vehicle-mounted device, a wearable device, a terminal device in a next-generation communication system (such as an NR network), a terminal device in a future evolved public land mobile network (PLMN), a terminal device in a cellular Internet of Things, a terminal device in a cellular passive Internet of Things, or the like.

In the embodiments of the present application, the terminal device may be deployed on land, which includes indoor or outdoor, handheld, wearable or vehicle-mounted; or the terminal device may be deployed on water (e.g., on a ship); or the terminal device may be deployed in the air (e.g., on an airplane, a balloon, a satellite, etc.).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not as a limitation, in the embodiments of the present application, the terminal device may also be a wearable device. The wearable device, which is also referred to as a wearable smart device, is a generic term for devices that are developed by intelligent design on daily wears by using a wearable technology and can be worn, such as glasses, gloves, watches, clothing, and shoes. The wearable device is a portable device that is worn directly on the body, or integrated into the user's clothing or accessories. The wearable device not only is a hardware device, but also implements powerful functions through software support, data interaction, and cloud interaction. Generalized wearable smart devices include devices that have full functions and large sizes, and may implement complete or partial functions without relying on smart phones (such as smart watches or smart glasses), as well as devices that focus on a certain kind of application functions only and need to be used in combination with any other device such as a smart phone (such as various smart bracelets and smart jewelries for monitoring physical signs).

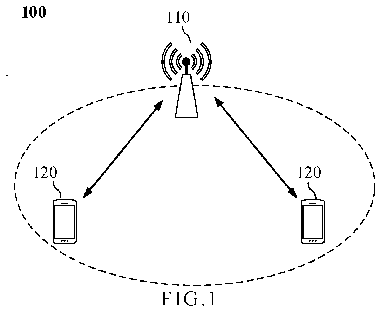

For example, the communication system 100 applied by the embodiments of the present application is shown in FIG. 1. The communication system 100 may include a network device 110, and the network device 110 may be a device that communicates with terminal devices 120 (which are also referred to as communication terminals or terminals). The network device 110 may provide communication coverage for a specific geographical area and may communicate with terminal devices located within the coverage area.

FIG. 1 exemplarily shows one network device and two terminal devices. Optionally, the communication system 100 may include multiple network devices and another number of terminal devices within a coverage range of each network device, and the embodiments of the present application are not limited thereto.

Optionally, the communication system 100 may further include other network entities such as a network controller and a mobility management entity, which are not limited in the embodiments of the present application.

It should be understood that, in the embodiments of the present application, a device with a communication function in the network/system may be referred to as a communication device. By taking the communication system 100 shown in FIG. 1 as an example, communication devices may include the network device 110 with the communication function and the terminal device 120 with the communication function, and the network device 110 and the terminal device 120 may be the specific devices described above, which will not be repeated here. The communication devices may further include other devices in the communication system 100, such as a network controller, a mobility management entity, and other network entities, which are not limited in the embodiments of the present application.

It should be understood that the terms "system" and "network" may be used interchangeably herein. Herein, the term "and/or" is only a description for an association relationship of associated objects, and indicates that three relationships may exist. For example, A and/or B may mean three situations that: A exists alone, both A and B exist, and B exists alone. Moreover, the character "/" herein generally indicates that the associated objects before and after this character are in an "or" relationship.

It should be understood that "indicate" mentioned in the embodiments of the present application may mean a direct indication, may mean an indirect indication, or may represent that there is an association relationship. For example, that A indicates B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence between two; or it may mean that there is an association relationship between the two; or it may mean a relationship of indicating and being indicated or a relationship of configuring and being configured.

In the embodiments of the present application, "predefined" may be implemented by pre-storing corresponding codes, tables or other methods that can be used for indicating related information in devices (for example, including the terminal device and the network device), and the present application does not limit its specific implementations. For example, the predefined may refer to what is defined in a protocol.

In the embodiments of the present application, the "protocol" may refer to standard protocols in the communication field, which may include, for example, an LTE protocol, an NR protocol, and related protocols applied in future communication systems, and the present application does not limit this.

To facilitate the understanding of the technical solutions in the embodiments of the present application, related technologies of the present application will be explained.

### 1. Zero-power Consumption Communication

In recent years, zero-power consumption devices have been used wider. A typical zero-power consumption device is a radio frequency identification (RFID) device, and RFID is a technology that uses the spatial coupling of wireless radio frequency signals to realize contactless automatic transmission and identification of tag information. RFID tags are also referred to as "radio frequency tags" or "electronic tags". The types of electronic tags classified according to different power supply manners may include active electronic tags, passive electronic tags and semi-passive electronic tags. The active electronic tag, also known as an initiative electronic tag, means that the working power of the electronic tag is provided by a battery, and the battery, memory and antenna together form the active electronic tag. Different from the active manner of a passive radio frequency, the active electronic tag transmits information through a set frequency band until the battery is replaced. The passive electronic tag, also known as an inactive electronic tag, does not support a built-in battery. When the passive electronic tag approaches a reader/writer, the tag is within a near-field range formed by radiation of an antenna of the reader/writer. An antenna of the electronic tag generates an induced current through electromagnetic induction, and the induced current drives a chip circuit of the electronic tag. The chip circuit transmits identification information stored in the tag to the reader/writer through the antenna of the electronic tag. The semi-active electronic tag inherits the advantages of small size, light weight, low price and long service life of the passive electronic tag. When the reader/writer does not access the semi-active electronic tag, the built-in battery of the semi-active electronic tag only provides power for a few circuits in the chip; and only when the reader/writer accesses the semi-active electronic tag, the built-in battery of the semi-active electronic tag supplies power to the RFID chip, so as to increase the reading and writing distance of the tag and improve the reliability of communication.

The most basic RFID system is composed of two parts: an electronic tag (TAG) and a reader/writer. The electronic tag is composed of coupling components and chips. Each electronic tag has a unique electronic code, which is placed on a measured target to achieve the purpose of marking a target object. The reader/writer can not only read the information on the electronic tag, but also write the information on the electronic tag, and meanwhile provide the electronic tag with the power needed for communication. After entering the electromagnetic field, the electronic tag receives the radio frequency signal transmitted by the reader/writer. The passive electronic tag or the inactive electronic tag uses the power obtained by the electromagnetic field generated in space to transmit the information stored in the electronic tag. The reader/writer reads the information and decodes the information to identify the electronic tag.

Communication based on zero-power consumption devices is abbreviated as zero-power consumption communication.

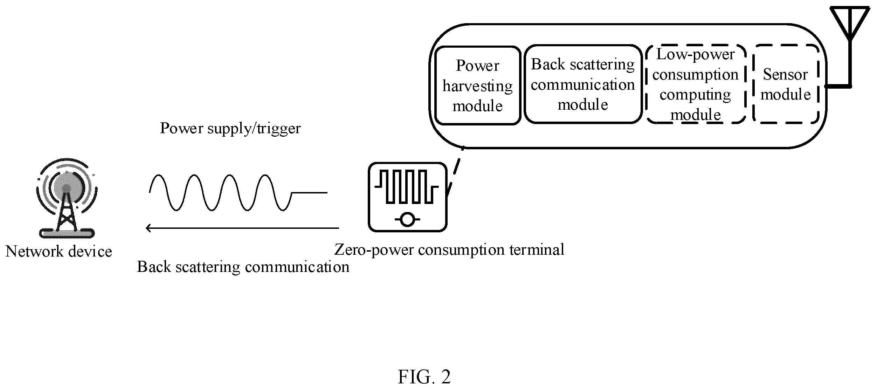

As shown in FIG. 2, a typical zero-power consumption communication system (e.g., an RFID system) includes a network device (e.g., a reader/writer of the RFID system) and a zero-power consumption device (e.g., an electronic tag). The network device is used to transmit a wireless power supply signal and a downlink communication signal to the zero-power consumption device and receive a back scattering signal from the zero-power consumption device. Optionally, the zero-power consumption device includes a power harvesting module, a back scattering communication module, and a low-power computing module. In addition, the zero-power consumption device may further have a memory or sensor for storing some basic information (such as object identification) or sensing data such as ambient temperature and ambient humidity.

For example, the power harvesting module can harvest power carried by a radio wave (a radio wave emitted by the network device shown in FIG. 2) in space to drive the low-power computing module of the zero-power consumption device and implement back scattering communication. After obtaining power, the zero-power consumption device can receive a control command from the network device and transmit data to the network device in a back scattering manner based on the control signaling. The data transmitted may be data stored in the zero-power consumption device itself (such as an identity identifier or pre-written information (e.g., the production date, brand, and manufacturer of the product)). The zero-power consumption device may also be loaded with various sensors, so as to report data collected by various sensors based on the zero-power consumption mechanism.

The key technologies of the zero-power consumption communication will be described below.

### 1. RF power harvesting

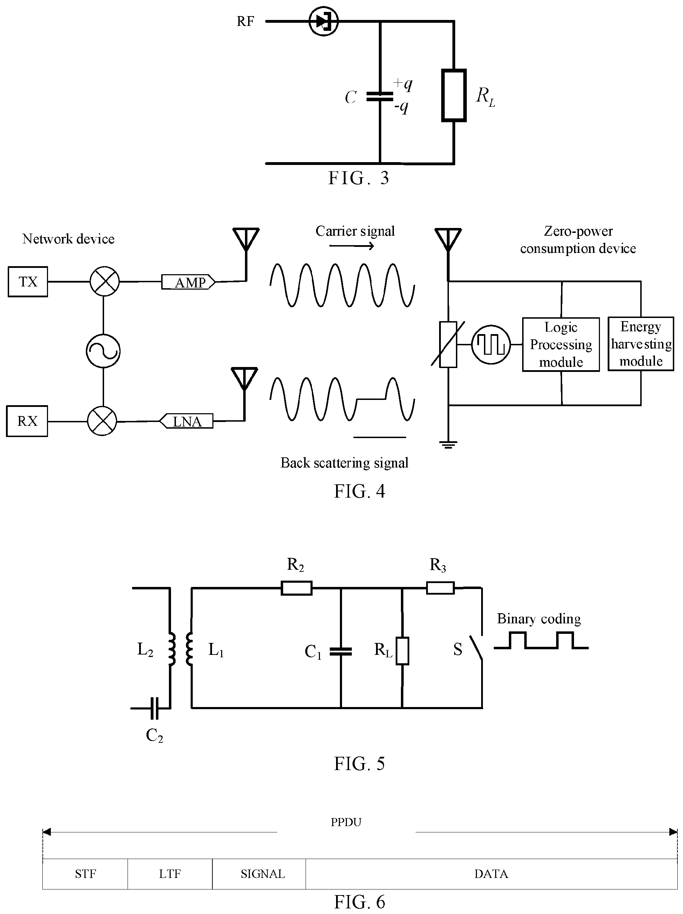

As shown in FIG. 3, an RF power harvesting module harvests electromagnetic wave energy in space based on the principle of electromagnetic induction, and then obtain the power needed to drive the working of the zero-power consumption device, e.g., driving low-power demodulation and modulation modules, sensors, and memory reading. Therefore, the zero-power consumption device does not need a traditional battery.

### 2. Back scattering communication

As shown in FIG. 4, the zero-power consumption device receives a carrier signal transmitted by the network device, modulates the carrier signal, loads the information needs to be sent and radiates the modulated signal from the antenna. This information transmission process is referred to as back scattering communication. Back scattering and load modulation functions are inseparable. The load modulation adjusts and controls circuit parameters of the oscillation loop of the zero-power consumption device according to the rhythm of the data stream, so that the size of the impedance and other parameters of the zero-power consumption device change accordingly, thereby completing the modulation process. The load modulation technology mainly includes resistance load modulation and capacitance load modulation, as shown in FIG. 5. In the resistance load modulation, a resistor is connected in parallel with the load, and the resistor is switched on or off based on control of a binary data stream. The on and off of the resistor will cause a circuit voltage to change, so that amplitude shift keying (ASK) modulation is achieved. That is, signal modulation and transmission is achieved by adjusting an amplitude of the back scattering signal of the zero-power consumption device. Similarly, in the capacitance load modulation, a resonant frequency of the circuit can be changed by switching the capacitor on and off, so that frequency shift keying (FSK) modulation is achieved. That is, the signal modulation and transmission is achieved by adjusting an operating frequency of the back scattering signal of the zero-power consumption device.

It can be seen that the zero-power consumption device modulates an incoming signal by means of load modulation, thereby achieving the back scattering communication process. Therefore, the zero-power consumption device has following significant advantages.
(1) The zero-power consumption device does not actively emit signals, and thus complex RF links (such as a PA, RF filter) are not needed.
(2) There is no need to actively generate high-frequency signals, and thus a high-frequency crystal oscillator is not needed.
(3) By means of the back scattering communication, the signal transmission of the terminal does not need to consume the terminal's own power.

### 3. Coding technology

The data transmitted by the zero-power consumption device can use different forms of codes to represent binary "1" and "0". Wireless RFID systems generally use one of following encoding manners: reverse non-return-to-zero (NRZ) encoding, Manchester encoding, unipolar return-to-zero encoding, differential bi-phase (DBP) encoding, differential encoding, pulse interval encoding (PIE), bi-phase space encoding (FM0), Miller encoding, differential encoding, etc. Generally speaking, different encoding technologies use different pulse signals to represent 0 and 1.

In some scenarios, based on the energy source and usage of zero-power consumption devices, the zero-power consumption devices can be divided into the following types.

### 1. Passive zero-power consumption device

The zero-power consumption device (e.g., an electronic tag in an RFID system) does not need a built-in battery. When the zero-power consumption device approaches a network device (e.g., a reader/writer in the RFID system), the zero-power consumption device is within the near-field range formed by radiation of the antenna of the network device. Therefore, the antenna of the zero-power consumption device generates an induced current through electromagnetic induction, and the induced current drives a low-power chip circuit of the zero-power consumption device. The demodulation of the forward link signal and the modulation of the backward link (or reflection link) signal are achieved. For the back scattering link, the zero-power consumption device uses back scattering implementation for signal transmission.

It can be seen that the passive zero-power consumption device does not need the built-in battery to drive either the forward link or the backward link, and is a true zero-power consumption device.

The passive zero-power consumption device does not need the battery, and the RF circuit and baseband circuit are very simple. For example, the passive zero-power consumption device does not need a low-noise amplifier (LNA), a power amplifier (PA), a crystal oscillator, an analog-to-digital converter (ADC) and the like, and thus the passive zero-power consumption device has many advantages such as small size, light weight, very low price, and long service life.

### 2. Semi-passive zero-power consumption device

The semi-passive zero-power consumption device itself is not installed with a conventional battery, but an RF power harvesting module can be used to harvest radio wave energy and store the harvested energy in a power storage unit (such as a capacitor). After obtaining energy, the power storage unit can drive the low-power chip circuit of the zero-power consumption device, and thus the demodulation of the forward link signal and the modulation of the backward link signal are achieved. For the back scattering link, the zero-power consumption device uses back scattering implementation for signal transmission.

It can be seen that the semi-passive zero-power consumption device does not need the built-in battery to drive either the forward link or the backward link. Although the energy stored in the capacitor is used in the operation, the energy comes from the radio energy harvested by the power harvesting module. Therefore, the semi-passive zero-power consumption device is also a true zero-power consumption device.

The semi-passive zero-power consumption device inherits many advantages of the passive zero-power consumption device, and thus the semi-passive zero-power consumption device has many advantages such as small size, light weight, very cheap price and long service life.

### 3. Active zero-power consumption device

The zero-power consumption device used in some scenarios may also be an active zero-power consumption device, which may have a built-in battery used to drive the low-power chip circuit of the zero-power consumption device. Thus, the demodulation of the forward link signal and the modulation of the backward link signal are achieved. However, for the back scattering link, the zero-power consumption device uses back scattering implementation for signal transmission. Therefore, the zero-power consumption of this type of devices is mainly reflected in the fact that the signal transmission of the backward link does not need the terminal's own power, but uses the back scattering manner.

### 2. Cellular Passive Internet of Things

With the increase in 5G industry applications, types of connected objects and application scenarios are increasing, and there will be high requirements on the cost and power consumption of communication terminals. The application of passive IoT devices with battery-free, low-cost will become a key technology for cellular IoT, which will enrich the types and number of 5G network-linked terminals, thereby truly achieving Internet of Everything. Passive IoT devices can be based on the zero-power consumption communication technology (such as the RFID technology), and can be extended on this basis to be suitable for cellular IoT.

In order to facilitate understanding of the embodiments of the present application, the power supply signal, scheduling signal and carrier signal related to the zero-power consumption communication are described.

### 1. Power supply signal

The power supply signal is an energy source for the zero-power consumption device to harvest power.

In terms of a carrier of the power supply signal, the carrier may be a base station, a smart phone, a smart gateway, a charging station, or a micro base station.

In terms of a frequency band, the frequency band of the radio wave used for power supply may be a low frequency, medium frequency, or high frequency.

In terms of a waveform, the radio wave used for power supply may be a sine wave, a square wave, a triangle wave, a pulse, or a rectangular wave.

In addition, the power supply signal can be a continuous wave or a discontinuous wave (that is, a certain period of interruption is allowed).

Optionally, the power supply signal may be an existing signal in the 3GPP standard. For example, the power supply signal is a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), or a physical broadcast channel (PBCH); or the power supply signal can be a WIFI signal or a Bluetooth signal.

Optionally, the power supply signal may also be implemented through a signal newly defined, e.g., a signal newly defined and dedicated to power supply.

### 2. Trigger signal or scheduling signal

The trigger signal is used to trigger or schedule the zero-power consumption device for data transmission.

In terms of a carrier of the trigger signal, the carrier can be a base station, a smart phone, or a smart gateway.

In terms of a frequency band, the radio wave used for triggering or scheduling may be in a low frequency, medium frequency, or high frequency.

In terms of a waveform, the radio wave used for triggering or scheduling may be a sine wave, a square wave, a triangle wave, a pulse, or a rectangular wave.

In addition, the trigger signal may be a continuous wave or a discontinuous wave (i.e., a certain period of interruption is allowed).

Optionally, the trigger signal may be an existing signal in the 3GPP standard. For example, the trigger signal is a SRS, a PUSCH, a PRACH, a PUCCH, a PDCCH, a PDSCH, or a PBCH; or the trigger signal is a WIFI signal, or a Bluetooth signal.

Optionally, the trigger signal may also be implemented by a signal newly defined, e.g., a signal newly defined and dedicated to triggering or scheduling.

### 3. Carrier signal

The carrier signal is used for the zero-power consumption device to generate a back scattering signal. For example, the zero-power consumption device can modulate a received carrier signal according to the information needed to be sent, so as to form the back scattering signal.

In terms of a carrier of the carrier signal, the carrier can be a base station, a smart phone, or a smart gateway.

In terms of a frequency band, the radio wave used for the carrier signal may be in a low frequency, medium frequency, or high frequency.

In terms of a waveform, the radio wave used for the carrier signal may be a sine wave, a square wave, a triangle wave, a pulse, or a rectangular wave.

In addition, the carrier signal may be a continuous wave or a discontinuous wave (i.e., a certain period of interruption is allowed).

Optionally, the carrier signal may be an existing signal in the 3GPP standard. For example, the carrier signal is a SRS, a PUSCH, a PRACH, a PUCCH, a PDCCH, a PDSCH, or a PBCH; or the carrier signal is a WIFI signal, a Bluetooth signal, or a Zigbee signal.

Optionally, the carrier signal may also be implemented by a signal newly defined, e.g., a signal newly defined and dedicated to generating a back scattering signal.

It should be noted that, in the embodiments of the present application, the power supply signal, the scheduling signal and the carrier signal may be the same signal, or may also be different signals. For example, the power supply signal may be used as the carrier signal, and the scheduling signal may also be used as the carrier signal.

In order to facilitate understanding of the embodiments of the present application, the communication technology in the WIFI system related to the present application will be described.

In the WIFI system, information of a WIFI device may be transmitted on the basis of a physical layer protocol data unit (PPDU) frame. The PPDU frame includes a physical layer header and a data portion.

For example, in 802.11a/g, as shown in FIG. 6, the physical layer header of the PPDU frame may include a short training field (STF), a long training field (LTF), and a SIGNAL field.

STF is mainly composed of 10 short symbols (t1 to t10), and each of which is 0.8 µs; and the symbols achieve multiple functions mainly including frame synchronization and coarse frequency synchronization. The main functions implemented by t1 to t7 include signal detect, automatic gain control (AGC), and diversity selection. The functions implemented by t8 to t10 include coarse frequency (Coarse Freq), offset estimation, and timing synchronize functions. LTF is mainly used to achieve fine frequency synchronization and channel estimation. The SIGNAL field is used to carry information related to the data part, including data transmission rate, length information of the data packet, reserved bit(s) and tail bit(s).

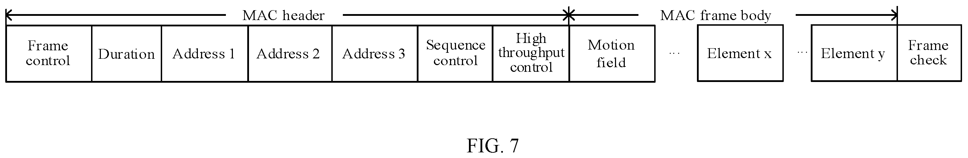

The data part of PPDU carries a media access control (MAC) frame, and a frame format of the MAC frame includes the following parts: a MAC header, a frame body, and a frame check sequence (FCS). FIG. 7 illustrates a schematic diagram of a frame format of PPDU. As shown in FIG. 7, the following fields may be included:
a Duration/ID field, used to indicate a duration of time a channel is occupied by the frame and its acknowledgement frame, where the Duration value is used for network allocation vector (NAV) calculation;
address fields, used to indicate:
   a destination address;
   a source address;
   a transmitting address (TA);
   a receiving address (RA); and
   a BSS ID;
a sequence control field, which is used to filter duplicate frames, and includes:
   a MAC server data unit (MSDU) having a12-bit sequence number; and
   a MAC management server data unit (MMSDU) having a 4-bit fragment number;
a quality of service (QoS) control field, which is a new MAC layer field in 802.11e and used for priority control (this field exists only when the data frame is a QOS data subtype);
an HT control field, which is a new MAC layer field in 802.11n (starting from 802.11n, MAC began to support 40 M bandwidth, which means that the original two 20 M bandwidths are merged into one 40 M bandwidth, and thus this field provides some control for high-throughput data; and this field exists only when the frame is set to a high throughput frame);
a frame body (or data), used to carry the information transmitted or received; and
an FCS field, including 32-bit cyclic redundancy check (CRC) and being used for error detection.

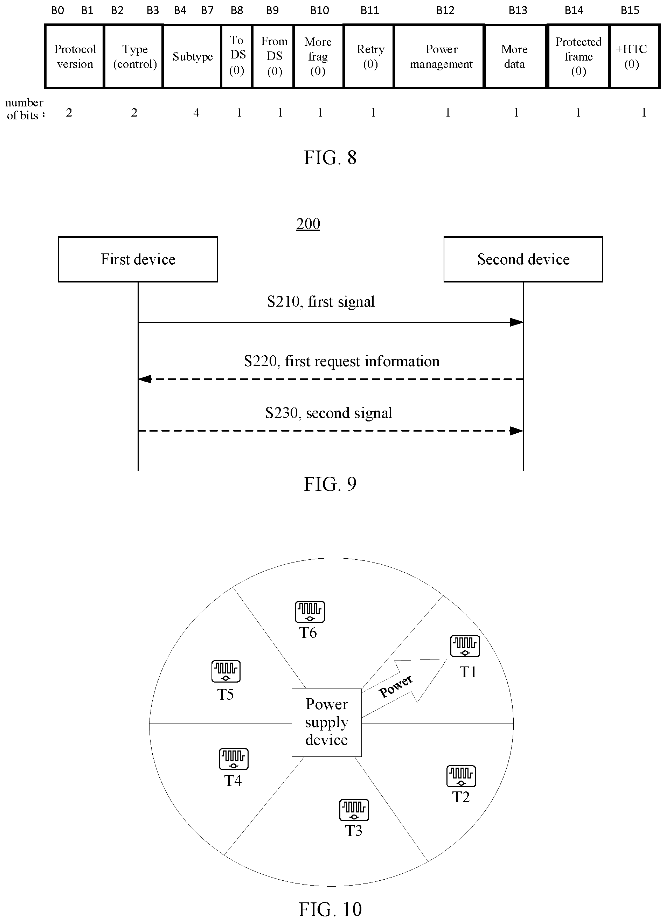

FIG. 8 is a schematic diagram of a format of a frame control field in a MAC header. As shown in FIG. 8, the following fields may be included:
a protocol version field, used to indicate the protocol version, e.g., 0 or 1;
a type field, used to indicate a frame type, where the frame type may be, for example, one of following:
   a control frame, used for handshake communication and forward acknowledgement during a contention period, and end of non-contention period;
   a management frame, mainly used for negotiation and relationship control between STA and AP, such as association, authentication, and synchronization; and
   a data frame, used to transmit data during contention and non-contention periods; a subtype field, used to further determine a subtype of the frame type;
a To Distributed System (To DS) field, used to indicate whether the frame is a frame transmitted from a basic service set (BSS) to a distributed system (DS);
a From DS field, used to indicate whether the frame is a frame transmitted by the DS to the BSS;
a More frag field, used to indicate whether there are other frames in a case where a long frame is segmented (if so, the value is set to 1);
a retry field, used to indicate that the segment is a retransmission frame of a previously transmitted segment;
a power management field, used to indicate a power management mode adopted by the station after transmitting the frame;
a More data field, used to indicate that many frames are buffered into the station (that is, the More data field is set to 1 when there is also at least one data frame to be transmitted to the STA);
a protected frame field, used to indicate that the frame body is encrypted according to algorithm (the protected frame field is set to 1 when the frame body part contains key-processed data, otherwise it is set to 0); and
+ high throughput control (HTC) field, used to indicate an indicator bit related to the high throughput (HT) control field.

In practical network deployment, a technical bottleneck faced by the passive zero-power consumption communication technology is that a coverage distance of the forward link is limited. The main reason is that the communication distance of the forward link is limited by a signal strength of a radio signal reaching the zero-power consumption device. Based on the existing implementation process, generally, the zero-power consumption device needs to consume 10 microwatts (µw) of power to drive low-power circuit(s). This means that the signal power reaching the zero-power consumption device needs to be at least -20 dBm. Due to the requirements of radio supervision, a transmission power of the network device generally cannot be too large. For example, in the ISM frequency band where RFID operates, the maximum transmission power is 30 dBm. Therefore, considering the radio propagation loss in space, the transmission distance of the passive zero-power consumption device is generally in a range of 10 m to tens of meters.

In contrast, the semi-passive zero-power consumption device has the potential to significantly expand the communication distance. This is because the semi-passive zero-power consumption device can use the power harvesting module for collecting radio waves, thereby continuously obtaining radio power and storing it in the power storage unit. After obtaining enough power, the power storage unit can drive the low-power circuit(s) to work for signal demodulation of the forward link, signal modulation of the backward link, and other operations. In this case, the semi-passive zero-power consumption device is equivalent to an active terminal, and its downlink coverage depends on a receiver sensitivity (generally far below the RF power harvesting threshold) of the downlink signal. Based on the current process, the power harvesting module can perform power harvesting and input electrical power to the power storage unit when the strength of the received radio signal is not less than -30 dBm. Therefore, the coverage of the forward link of the semi-passive zero-power consumption device depends on the power harvesting threshold (e.g., -30 dBm). Compared with the passive zero-power consumption device, for the semi-passive zero-power consumption device, the strength of the received radio signal is relaxed from -20 dBm to -30 dBm, so that a link budget gain of 10 dB may be obtained, and the downlink coverage may be improved by more than 3 times.

However, while improving the forward link coverage, the semi-passive zero-power consumption device also faces the problem of reduced charging efficiency. As the strength of the received signal decreases, the power that the power harvesting module can harvest and store is greatly reduced. For example, when the strength of the received signal is -30 dBm, i.e., 1 microwatt hour, the power that can be harvested and stored is far less than 1 microwatt (because the power harvesting efficiency is greatly reduced). In addition, as previously mentioned, the low-power circuit(s) of the zero-power consumption device may need to consume an average power of 10 µw.

It can be seen that the power storage of the zero-power consumption device will affect data transmission. Therefore, how to supply the power to the zero-power consumption device to ensure the data transmission of the zero-power consumption device is an urgent problem to be solved. Moreover, the zero-power consumption device needs to perform back scattering using the carrier signal, so as to perform the data transmission. Therefore, how to provide the carrier signal for the zero-power consumption device to ensure the data transmission of the zero-power consumption device is also an urgent problem to be solved.

In order to facilitate understanding of the technical solutions of the embodiments of the present application, the technical solutions of the present application will be described in detail below with reference to specific embodiments. The above related technologies can be arbitrarily combined with the technical solutions of the embodiments of the present application as optional solutions, and these belong to the protection scope of the embodiments of the present application. The embodiments of the present application include at least some of following contents.

FIG. 9 is a schematic diagram showing interaction of a wireless communication method 200 according to embodiments of the present application. As shown in FIG. 9, the method 200 includes at least some of following contents.

In S210: a first device transmits a first signal to a second device, where the first signal is used for the second device to perform power harvesting and/or for the second device to perform back scattering, and the first signal is a signal predetermined to be transmitted.

In some embodiments, the first signal is used for the second device to perform power harvesting and/or for the second device to perform back scattering, which may mean that the first signal is used for supplying power to the second device and/or providing a carrier signal for the second device. That is, the first signal is used as a power supply signal and/or a carrier signal.

In some embodiments, in a case where the first signal is used as the power supply signal, the first device is referred to as a power supply device, and the second device is referred to as a power harvesting (energy harvesting) device.

In some embodiments, in a case where the first signal is used as the carrier signal, the first device is referred to as a carrier transmission device.

In some embodiments, the first signal is referred to as a first power supply signal in the case where the first signal is used as the power supply signal, and the first signal is referred to as a first carrier signal in the case where the first signal is used as the carrier signal.

In some embodiments, the first power supply signal and the first carrier signal may be independent signals. In this case, the first power supply signal and the first carrier signal may be transmitted by a same device, or may be transmitted by different devices.

For example, the first device provides the first power supply signal for the second device, and a third device provides the first carrier signal for the second device.

For another example, the first device provides the first power supply signal for the second device, and the first device provides the first carrier signal for the second device.

In some other embodiments, the first power supply signal and the first carrier signal may also be a same signal. That is, the signal is used for supplying power and providing a carrier.

Optionally, in the case where the first signal is used as the power supply signal only, the specific source of the carrier signal of the second device is not limited in the embodiments of the present application. For example, the carrier signal may be transmitted by the first device, or may be transmitted by the third device.

Optionally, in the case where the first signal is used as the carrier signal only, the energy source of the second device is not limited in the embodiments of the present application. For example, the energy may be derived from radio signals, solar energy, thermal energy, or mechanical energy in the environment, or may be derived from a power supply signal of the first device, or a power supply signal of the third device.

In some embodiments, the second device may be a device that has both a power supply requirement and a carrier requirement.

For example, the second device may perform the back scattering communication based on the carrier signal; and the second device may perform power harvesting based on the power supply signal, or perform power harvesting based on another energy source, such as solar energy, thermal energy, or mechanical energy.

Optionally, the second device may be a zero-power consumption device.

Optionally, the second device may include a power harvesting module and a back scattering communication module; the power harvesting module is used for power harvesting, and the back scattering communication module is used for the back scattering communication through the carrier signal.

In some other embodiments, the second device may be a device with the carrier requirement only.

For example, the second device does not need to perform power harvesting, but may perform the back scattering communication based on the carrier signal.

Optionally, the second device may include a back scattering communication module. For example, the second device may be an active terminal including the back scattering communication module (that is, the back scattering communication module may be added to a conventional terminal). Optionally, the second device further includes an active transmission communication module for performing data transmission in an active transmission manner.

In some specific embodiments, the second device may be an ambient power-based device, such as an ambient powered Internet of Things (AMP IoT) device, a communication device in a cellular network (e.g., a device in the cellular network having a carrier requirement and/or a power supply requirement), or a communication device in a non-cellular network (e.g., a device in the non-cellular network having a carrier requirement and/or a power supply requirement). Non-cellular networks may include, for example, but is not limited to, a WIFI system, a Bluetooth system, a Zigbee system, a Lora system, and the like.

In some specific embodiments, the first device may be a network device in a communication system, such as a base station in the cellular network, or an AP in the WIFI system; or the first device may be an active terminal in a communication system, an independent power supply device, or a dedicated power supply device.

In some embodiments, the peer device communicating with the second device may be the first device, or may be another device.

That is, the device communicating with the second device and the power supply device of the second device may be a same device, or may be different devices.

In some embodiments, in the case where the first signal is used as the power supply signal, the first signal may be understood as a basic power supply signal, or a power supply signal transmitted actively (or a power supply signal that is not transmitted based on a request or trigger), or a power supply signal that is not transmitted on demand. The power supply signal is used to ensure the basic power supply requirement of the second device.

In some embodiments, in the case where the first signal is used as the carrier signal, the first signal may be understood as a basic carrier signal, or a carrier signal transmitted actively (or a carrier signal that is not transmitted based on a request or trigger), or a carrier signal that is not transmitted on demand. The carrier signal is used to ensure the basic carrier requirement of the second device.

In some embodiments, the first signal is used to ensure the power and/or carrier required when the second device transmits necessary information (such as request information, emergency information, and alarm information). For example, the second device may perform power harvesting on the first signal to transmit the necessary information. For another example, the second device may perform back scattering on the first signal to transmit the necessary information.

Optionally, the request information may be used for requesting the power supply signal and/or the carrier signal, or may be used for requesting resources for data transmission.

Optionally, the emergency information or the alarm information may be transmitted to the network device.

In some embodiments, that the first signal is a signal predetermined to be transmitted may mean that the transmission of the first signal is pre-agreed or predefined, or that the first signal is a signal that is determined to be transmitted.

It should be understood that the present application does not limit the specific transmission manner of the first signal. For example, the first signal may be transmitted periodically or aperiodically. Optionally, a time interval between adjacent time periods for transmitting the first signal may be designed to be less than a first duration, so as to ensure that the second device does not need to wait for too long when power harvesting is needed, or that the second device does not need to wait for too long when back scattering is needed. Optionally, the first duration may be determined according to a service period of the second device, a power storage capacity of the second device, a power harvesting efficiency, or the like.

In some embodiments, the first device may transmit the first signal according to a specific pattern. Optionally, the specific pattern may be periodic or aperiodic. Optionally, the specific pattern may be predefined, or the specific pattern may be configured by the network device.

For example, the first device periodically transmits the first signal according to the first pattern.

For another example, the first device transmits the first signal within a first time period according to a first pattern, and transmits the first signal within a second time period according to a second pattern.

In some embodiments, the transmission of the first signal needs to consider issues such as power overhead and resource overhead. For example, the first signal may be transmitted discontinuously.

Hereinafter, the specific design of the first signal will be described by taking an example where the first signal is the power supply signal, and in the case where the first signal is the carrier signal or the first signal is used as the power supply signal and the carrier signal, the design method is similar, which will not be repeated here. That is, the power supply signal described hereinafter may be replaced with the carrier signal, or may be replaced with the power supply signal and the carrier signal.

In some embodiments of the present application, an existing signal in the communication system may be used as the power supply signal.

For example, in the WIFI system, a frame transmitted periodically (e.g., a beacon frame) may be used as the power supply signal.

For another example, in the cellular network, a signal transmitted periodically (e.g., a synchronization signal block (SSB)) may be used as the power supply signal.

In some other embodiments of the present application, a signal newly defined in the communication system may be used as the power supply signal. For example, the first signal may be a dedicated power supply signal.

For example, in the WIFI system, the newly defined frame is used to carry the power supply signal, or is used as the power supply signal. As an example, a frame that is newly defined and transmitted periodically is used as the power supply signal. For example, a periodically transmitted beacon frame is newly added as the power supply signal. In order to distinguish from the existing beacon frame in the WIFI system, this periodically transmitted beacon frame may be referred to as a power beacon frame.

For another example, in the cellular network, the newly defined signal is used as the power supply signal. As an example, a signal that is newly defined and transmitted periodically is used as the power supply signal.

In a specific embodiment, the first device is a network device in the cellular network, and the power supply signal may be a newly defined downlink signal. For example, a downlink signal that is newly defined and transmitted periodically is used as the power supply signal.

In some embodiments, a transmission period of the first signal and/or a duration of the first signal within a period is predefined.

That is, the first device and the second device may know the transmission period of the first signal and/or the duration of the first signal within the period without information interaction.

In some other embodiments, a transmission period of the first signal and/or a duration of the first signal within a period is configured by the network device.

For example, in a case where the first device is not the network device, the network device may configure the first device with transmission period information of the first signal and/or duration information of the first signal within the period.

In yet some other embodiments, a transmission period of the first signal and/or a duration of the first signal within a period may be determined by the first device.

Optionally, the first device may configure the second device with transmission period information of the first signal and/or duration information of the first signal within the period. For example, the first device transmits first indication information to the second device, and the first indication information is used for indicating period information of the first signal and/or duration information of the first signal within a period.

In some embodiments, the first indication information may be carried in the first signal, or may be carried in another signal.

For example, the first signal is a periodic signal, and the first indication information may be carried in another periodic signal.

In some embodiments, that the first indication information may be carried in the first signal may include:
the first indication information is carried in a first frame, where the first frame is used to carry the first signal, or the first frame is used as the power supply signal.

In some other embodiments, the first indication information is carried in a second frame, and the second frame is different from the first frame.

For example, the first frame is the power beacon frame, and the first indication information is carried in the power beacon frame.

For another example, the second frame is the beacon frame, the first indication information is carried in the beacon frame, and the first signal is carried in the power beacon frame.

That is, the second device may obtain the period information and/or the duration information of the power beacon frame through the beacon frame or the power beacon frame.

In some embodiments of the present application, the transmission of the first signal has a certain spatial attribute or spatial relationship. For example, the first signal is transmitted based on at least one piece of spatial information. Optionally, the spatial information may include, but is not limited to, direction information, beam information, or a spatial domain transmission filter.

For example, a transmission antenna of the first device may be designed to have a strong gain in one or more directions, so that a transmission power of the signal may be concentrated in the one or more directions when the first device transmits the power supply signal. Optionally, the transmission antenna of the first device may be implemented by an antenna array.

In some embodiments, the first signal is transmitted periodically, and the first signal may be transmitted based on multiple pieces of spatial information within a period. For example, the first device may periodically transmit the power supply signal in multiple directions, so that zero-power consumption devices at different positions may receive the power supply signal. Power supply signals in different directions may be transmitted at different times, so that the transmission power of the power supply device may be concentrated in a certain direction, thereby improving the power level of the power supply signal reaching the zero-power consumption device.

As shown in FIG. 10, the power supply device transmits the power supply signal in multiple directions in a period. For example, the power supply device uses a poll manner to transmit the power supply signal in multiple directions. In this way, zero-power consumption devices at different positions may receive the power supply signal at different times.

In some embodiments of the present application, the method 200 further includes:
transmitting, by the first device, second indication information to the second device, where the second indication information is used for indicating spatial information of the first signal.

In some embodiments, the second indication information is carried in the first signal.

For example, the first signal is carried in the power beacon frame, and the second indication information can be carried in the power beacon frame.

It should be understood that, in the embodiments of the present application, in the case where the first device transmits the power supply signal, the source of power harvesting of the second device may be the power supply signal, or may be another energy source, such as solar energy, thermal energy, or mechanical energy. Since other energy sources other than the power supply signal have great uncertainty, by using the first device to provide the power supply signal for the second device, it is beneficial to ensure stable power supply for the second device.

In some embodiments of the present application, the method 200 further includes the following step.

In S220, the first device receives first request information transmitted by the second device, where the first request information is used for requesting the first device to transmit a target signal, and the target signal is used for the second device to perform power harvesting and/or for the second device to perform back scattering. That is, the first request information is used to request the power supply signal/or the carrier signal.

It should be understood that the embodiments of the present application do not limit the energy source for the second device to transmit the first request information. For example, the energy is from the first signal, or from ambient energy, such as solar energy, thermal energy, or mechanical energy.

In some embodiments, in a case where the first request information is used for requesting the power supply signal, the first request information is referred to as power supply request information.

In some embodiments, in a case where the first request information is used for requesting the carrier signal, the first request information is referred to as carrier request information.

In some embodiments, the first request information is used for requesting provision of an additional power supply signal and/or carrier signal for subsequent data transmission, and the additional power supply signal and/or carrier signal are relative to the basic power supply signal and/or carrier signal described above.

In some embodiments, the first signal is used for supplying the power and/or providing the carrier signal to ensure that the second device transmits the first request information.

For example, the first request information may be transmitted by the second device based on the power obtained through performing power harvesting on the first signal, and/or the first request information may be transmitted by the second device based on back scattering of the first signal.

That is, the first signal may be used to ensure transmitting of the first request information by the second device. After receiving the first request information, the second device may provide the additional power supply signal and/or carrier signal for the second device according to the first request information, thereby ensuring subsequent data transmission of the second device.

In some embodiments, the first request information is transmitted by the second device under a specific condition (e.g., an instantaneous power supply requirement or carrier requirement).

As an example, in a case where there exists data to be transmitted, or the power is insufficient, or a primary receiver of the second device is switched to a secondary receiver, the basic power supply signal is insufficient to meet the power supply requirement of the second device; and in this case, the second device may request the additional power supply signal through the first request information. Here, the power consumption of the primary receiver is higher than that of the secondary receiver.

In some embodiments, the first request information may include information of the target signal requested by the second device, information of a service to be transmitted, and information of a power harvesting capability of the second device. The first request information may be used for the first device to determine a transmission manner of the target signal.

In some embodiments, the first request information includes at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, where the third indication information is used for indicating that the second device requests the first device to transmit the target signal or is used for indicating that the second device has data to be transmitted.

Optionally, the third indication information may be of 1 bit.

For example, in a case where the second device wants to request the power supply signal, the first request information includes at least one of:
a time length of the power supply signal requested to be transmitted, a transmission period of the power supply signal requested to be transmitted, a strength of the power supply signal requested to be transmitted, spatial information of the power supply signal requested to be transmitted, a power harvesting capability of the second device, a type of a service to be transmitted by the second device, a duration of the service to be transmitted by the second device, a data amount of the service to be transmitted by the second device, or third indication information, where the third indication information is used for indicating a request for transmitting the power supply signal or is used for indicating that the second device has data to be transmitted.

For example, in a case where the second device wants to request the carrier signal, the first request information includes at least one of:
a time length of the carrier signal requested to be transmitted, a transmission period of the carrier signal requested to be transmitted, a strength of the carrier signal requested to be transmitted, spatial information of the carrier signal requested to be transmitted, a power harvesting capability of the second device, a type of a service to be transmitted by the second device, a duration of the service to be transmitted by the second device, a data amount of the service to be transmitted by the second device, or third indication information, where the third indication information is used for indicating a request for transmitting the carrier signal or is used for indicating that the second device has data to be transmitted.

In some embodiments, the spatial information of the target signal requested to be transmitted may be determined by the second device according to second indication information.

In practical applications, the power harvesting efficiency is greatly affected by the strength of the power supply signal, and the greater the power of the power supply signal reaching the power harvesting module of the second device, the higher the power harvesting efficiency. Therefore, in order to improve the power harvesting efficiency, the power supply signal is transmitted based on specific spatial information. Thus, the transmission power of the power supply signal can be concentrated in a certain direction, thereby improving the power level of the power supply signal reaching the power harvesting module of the second device. Therefore, the second device may acquire spatial information of the strong power supply signal through receiving the power supply signal. Furthermore, when the first request information is transmitted, the spatial information of the power supply signal may be indicated to the first device. Thus, the power supply device may adjust the direction of the power supply signal to a position where the second device is located according to the spatial information, so as to transmit the power supply signal to the second device at the position, which is beneficial to obtaining high power harvesting efficiency.

It should be understood that the embodiments of the present application do not limit the transmission manner of the first request information. For example, the first request information may be transmitted in an active transmission manner or may be transmitted in a back scattering manner.

For example, in a case where the second device includes a main transmitter and a back-scattering transmitter, the first request information may be transmitted based on the active transmission manner or may be transmitted based on the back scattering manner.

For example, in a case where the second device has the back-scattering transmitter, the first request information may be transmitted based on the back scattering manner.

Optionally, when the first request information is transmitted in the back scattering manner, the second device may use the power supply signal as the carrier signal to perform back scattering, or may use a dedicated carrier signal to perform back scattering, which is not limited in the present application.

In some embodiments, the first request information may be transmitted through an existing signal, channel or frame in the communication system.

For example, the first device is a network device in the cellular network, and the first request information is transmitted through an existing uplink signal or uplink channel. As an example, the first request information may be carried by a scheduling request (SR) signal.

For another example, the first device is a network device in the WIFI system, and the first request information is transmitted through an existing frame in the WIFI system.

In some other embodiments, the first request information may be transmitted through a signal, channel or frame newly defined.

For example, the first device is a network device in the cellular network, and the first request information is transmitted through a newly defined uplink signal or uplink channel.

For another example, the first device is a network device in the WIFI system, and the first request information is transmitted through a newly defined frame. For example, a physical layer protocol data unit (PPDU) frame newly defined is used to carry the first request information.

In some embodiments, the first request information may be carried by a first PPDU frame. For example, the first PPDU frame may include a request field used for carrying the first request information. Optionally, the request field may be carried in a frame control field of the first PPDU frame, or may be carried in a frame body of the first PPDU frame, which is not limited in the present application.

In a specific embodiment, the first PPDU frame may be a power-saving poll (PS-Poll) frame.

Optionally, the PS-Poll frame may include a power supply request field used for carrying power supply request information.

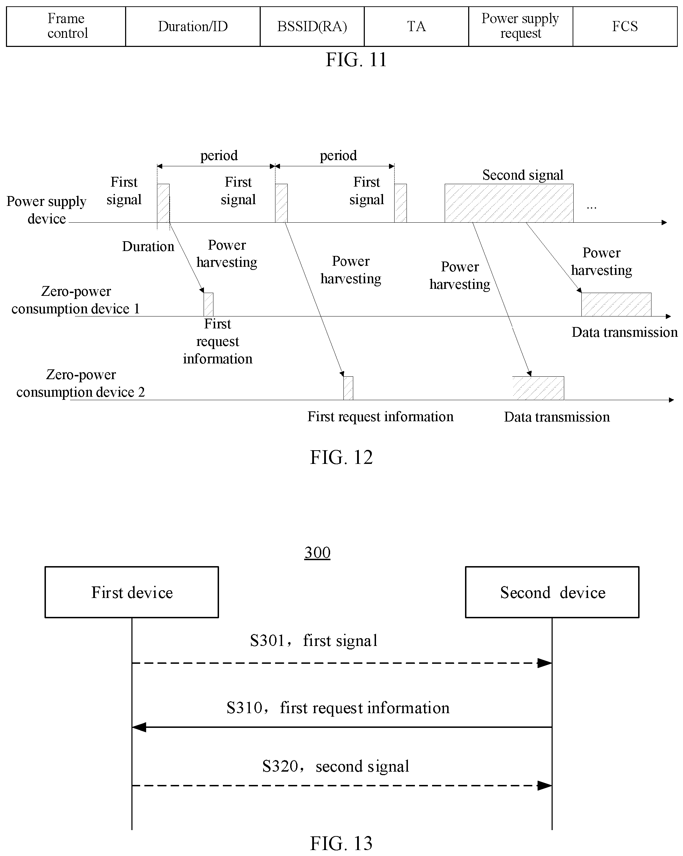

FIG. 11 is a schematic diagram of a format of a PS-Poll frame whose frame body carrying the power supply request field. In other embodiments, the power supply request field may also be carried in the frame control field of the PS-Poll frame.

In another specific embodiment, the first PPDU frame may be a null data PPDU (NDP) frame.

For example, an NDP carrying medium access control information (CMAC) PPDU type may be newly defined, and correspondingly, the control information carried by the NDP may be the first request information.

In some embodiments of the present application, the method 200 further includes the following step.

In S230, the first device transmits a second signal to the second device, where the second signal is used for the second device to perform power harvesting and/or for the second device to perform back scattering. That is, the second signal is used as the power supply signal and/or the carrier signal.

Optionally, the second signal may correspond to the target signal mentioned above.

In some embodiments, in the case where the second signal is used as the power supply signal, the second signal may be considered as a power supply signal that is not predetermined to be transmitted, or considered as an additional power supply signal, or considered as a power supply signal that is transmitted passively (e.g., a request-based or trigger-based power supply signal), or considered as a power supply signal that is transmitted on demand. The second signal may be used to ensure an instantaneous power supply requirement of the second device, or an urgently needed power supply requirement.

In some embodiments, in the case where the second signal is used as the carrier signal, the second signal may be considered as a carrier signal that is not predetermined to be transmitted, or considered as an additional carrier signal, or considered as a carrier signal that is transmitted passively (e.g., a request-based or trigger-based carrier signal), or considered as a carrier signal that is transmitted on demand. The second signal may be used to ensure an instantaneous carrier requirement of the second device, or an urgently needed carrier requirement.

In some embodiments, the second signal may be used for supplying power to the second device for the data transmission and/or providing the carrier signal for the data transmission of the second device.

In some embodiments, the second signal is transmitted based on the first request information of the second device.

For example, in a case where the first device receives the first request information of the second device, the first device transmits the second signal to the second device.

As an example, the first device may transmit the second signal according to specific spatial information, where the spatial information may be carried in the first request information or may be determined by the first device.

Hereinafter, the specific design of the second signal will be described by taking an example where the second signal is the power supply signal, and in the case where the second signal is the carrier signal or the second signal is used as the power supply signal and the carrier signal, the design method is similar, which will not be repeated here. That is, the power supply signal described hereinafter may be replaced with the carrier signal, or may be replaced with the power supply signal and the carrier signal.

In some embodiments, the second signal is transmitted periodically.

In some embodiments, a transmission period of the second signal is less than a transmission period of the first signal. That is, the additional power supply signal is transmitted more frequently than the basic power supply signal, which is beneficial to ensuring that the second device obtains sufficient power for data transmission.

In some embodiments, a duration of the second signal is greater than a duration of the first signal. That is, the transmission time of the additional power supply signal is longer than the transmission time of the basic power supply signal, which is beneficial to ensuring that the second device obtains sufficient power for data transmission.

In some embodiments, a transmission power of the second signal is greater than a transmission power of the first signal. That is, the strength of the additional power supply signal is greater than the strength of the basic power supply signal, which is beneficial to improving the power harvesting efficiency of the second device and ensuring that the second device obtains sufficient power for data transmission.

It should be understood that the present application does not limit the relationship between the transmission of the first signal and the second signal. For example, the first signal and the second signal may be transmitted independently or may be in an alternative relationship, or the second signal may be considered as an extension of the first signal.

In some embodiments, in a case where the first device transmits the second signal, the first device stops transmitting the first signal. This can be understood as the replacement of the power supply signal from the first signal to the second signal, or as the switching of the power supply signal from the first signal to the second signal.

Optionally, if the first device does not receive the power supply request information of the second device within a period of time after transmitting the second signal, the first device may stop transmitting the second signal and start transmitting the first signal. This can be understood as the power supply signal being switched back from the second signal to the first signal.

In some other embodiments of the present application, the second signal is transmitted aperiodically.

In some embodiments, the second signal may be an aperiodic power supply signal transmitted once or multiple times according to the first request information.

Optionally, the second signal is an extension of the first signal, and the power supply requirement of the second device is met through extending the transmission time of the power supply signal.

Optionally, the first device transmits, in one or more transmission periods after the first signal, the power supply signal with a longer duration after receiving the first request information.

It should be understood that the present application does not limit the specific transmission manner of the second signal. For example, the transmission manner of the second signal may be determined by the first device itself, or may be determined according to the first request information, or may be determined according to the scheduling situation of the first device.

In some embodiments, the transmission manner of the second signal includes at least one of:
a starting transmission time of the second signal, a duration of the second signal, a transmission power of the second signal, or spatial information of the second signal.

As an example, the first device may determine the spatial information of the second signal according to the spatial information in the first request information.

As another example, the first device may determine the starting transmission time of the second signal according to the information of the service to be transmitted in the first request information and/or the power harvesting capability. For example, in a case where the service to be transmitted is a service with a high delay requirement, the first device may transmit the second signal as early as possible. For another example, in a case where the power harvesting capability of the second device is low, the first device may transmit the second signal as early as possible.

A specific transmission manner of the power supply signal according to the embodiments of the present application is described as an example with reference to FIG. 12. As shown in FIG. 12, the power supply device may periodically transmit the first signal, and the zero-power consumption devices may harvest power based on the first signal. Furthermore, when there exists data to be transmitted, the zero-power consumption devices may transmit the first request information to the power supply device. After receiving the first request information transmitted by the zero-power consumption device, the power supply device may transmit the second signal for supplying power to the zero-power consumption device for data transmission. The zero-power consumption device may harvest the power of the second signal to perform data transmission.

In summary, in the embodiments of the present application, the first device may transmit the first signal to the second device used for providing the basic power supply signal and/or carrier signal for the second device, and may further provide the additional power supply signal and/or carrier signal for the second device based on the request of the second device. Thus, it is beneficial to reduce the overhead of the power supply signal or the carrier signal, and meanwhile the provision of the additional power supply signal and/or carrier signal based on the request of the second device can meet the power requirement and/or the carrier requirement of the second device.

FIG. 13 is a schematic diagram showing interaction of another wireless communication method 300 according to embodiments of the present application. As shown in FIG. 13, the method 300 includes at least some of following contents.

In S310, the second device transmits first request information to the first device, where the first request information is used for requesting the first device to transmit a target signal, and the target signal is used for the second device to perform power harvesting and/or for the second device to perform back scattering.

In some embodiments, the first request information includes at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, where the third indication information is used for indicating that the second device requests the first device to transmit the target signal.

In some embodiments, the method 300 further includes the following step.

In S320, the second device receives a second signal transmitted by the first device, where the second signal is used for the second device to perform power harvesting and/or for the second device to perform back scattering.

In some embodiments, the second signal is transmitted periodically, or the second signal is transmitted aperiodically.

In some embodiments, the second signal is transmitted based on the first request information.

In some embodiments, the method further includes the following step.

In S301, the second device receives a first signal transmitted by the first device, where the first signal is used for the second device to perform power harvesting and/or for the second device to perform back scattering, and the first signal is a signal predetermined to be transmitted.

In some embodiments, that the second device receives the first signal transmitted by the first device includes:
receiving, by the second device, a first frame transmitted by the first device, where the first frame is used for carrying the first signal.

In some embodiments, the first frame is a frame transmitted periodically.

In some embodiments, the first frame is a beacon frame.

In some embodiments, the first signal is transmitted periodically.

In some embodiments, a transmission period of the first signal and/or a duration of the first signal within a period is predefined; or
the transmission period of the first signal and/or the duration of the first signal within a period is configured by the first device; or
the transmission period of the first signal and/or the duration of the first signal within a period is configured by a network device.

In some embodiments, the transmission period of the first signal and/or the duration of the first signal within the period is configured by the first signal.

In some embodiments, the first signal is transmitted based on at least one piece of spatial information.

In some embodiments, the first signal is transmitted periodically, and the first signal is transmitted based on multiple pieces of spatial information within a period.

In some embodiments, the method 300 further includes:
receiving, by the second device, second indication information transmitted by the first device, where the second indication information is used for indicating spatial information of the first signal.

In some embodiments, the second indication information is carried in the first signal.

In some embodiments, a transmission period of the first signal is greater than a transmission period of the second signal transmitted by the first device; and/or
a duration of the first signal is less than a duration of the second signal transmitted by the first device.

It should be noted that the first signal, the second signal, and the first request information in the method 300 may correspond to the first signal, the second signal, and the first request information in the method 200, respectively. Reference is made to the relevant description in the method 200, which will not be repeated here for brevity.

In summary, in the embodiments of the present application, the second device may transmit the first request information to the first device for requesting the first device to provide the additional power supply signal and/or carrier signal for the second device, which is beneficial to meeting the power requirement and/or carrier requirement of the second device.

Optionally, the first request information may be transmitted based on the first signal transmitted by the first device. The first signal is used to provide the basic power supply signal and/or carrier signal for the second device, so as to ensure the basic power supply requirement and/or carrier requirement of the second device.

Optionally, the second device may receive the second signal transmitted by the first device, and the second signal is an additional power supply signal and/or carrier signal; and furthermore, the second device may perform data transmission based on the second signal.

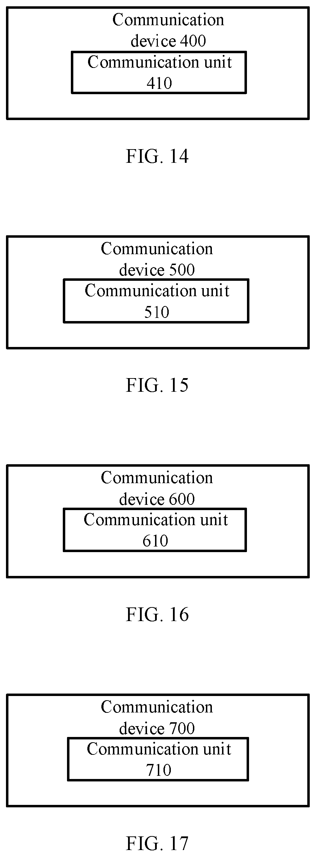

The method embodiments of the present application are described above in detail with reference to FIGS. 9 to 13, and device embodiments of the present application are described below in detail with reference to FIGS. 14 to 20. It should be understood that the device embodiments and the method embodiments correspond to each other, and similar descriptions may be made with reference to the embodiments of the method.

FIG. 14 shows a schematic block diagram of a communication device 400 according to embodiments of the present application. As shown in FIG. 14, the communication device 400 includes:
a communication unit 410, configured to transmit a first signal to a second device, where the first signal is used for the second device to perform power harvesting and/or for the second device to perform back scattering, and the first signal is a signal predetermined to be transmitted.

In some embodiments, the first signal is dedicated to the second device for power harvesting and/or to the second device for back scattering.

In some embodiments, the communication unit 410 is further configured to:
transmit a first frame to the second device, where the first frame is used for carrying the first signal.

In some embodiments, the first frame is a frame transmitted periodically.

In some embodiments, the first frame is a beacon frame.

In some embodiments, the first signal is transmitted periodically.

In some embodiments, a transmission period of the first signal and/or a duration of the first signal within a period is predefined; or
the transmission period of the first signal and/or the duration of the first signal within a period is configured by the network device.

In some embodiments, the communication unit 410 is further configured to:
transmit first indication information to the second device, where the first indication information is used for indicating period information of the first signal and/or duration information of the first signal within a period.

In some embodiments, the first indication information is carried in the first signal.

In some embodiments, the first signal is transmitted based on at least one piece of spatial information.

In some embodiments, the first signal is transmitted periodically, and the first signal is transmitted based on multiple pieces of spatial information within a period.

In some embodiments, the communication unit 410 is further configured to:
transmit second indication information to the second device, where the second indication information is used for indicating spatial information of the first signal.

In some embodiments, the second indication information is carried in the first signal.

In some embodiments, the communication unit 410 is further configured to:
receive first request information transmitted by the second device, where the first request information is used for requesting the communication device to transmit a target signal, and the target signal is used for the second device to perform power harvesting and/or for the second device to perform back scattering.

In some embodiments, the first request information includes at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, where the third indication information is used for indicating that the second device requests the communication device to transmit the target signal.

In some embodiments, the communication unit 410 is further configured to:
transmit a second signal to the second device, where the second signal is used to the second device to perform power harvesting and/or for the second device to perform back scattering.

In some embodiments, the second signal is transmitted based on first request information of the second device, where the first request information is used for requesting the communication device to transmit a target signal, and the target signal is used for the second device to perform power harvesting and/or for the second device to perform back scattering.

In some embodiments, the second signal is transmitted periodically, or the second signal is transmitted aperiodically.

In some embodiments, a transmission period of the second signal is less than a transmission period of the first signal; and/or
a duration of the second signal is greater than a duration of the first signal.

In some embodiments, a transmission manner of the second signal is determined by the communication device.

In some embodiments, the transmission manner of the second signal is determined according to the first request information of the second device; or
the transmission manner of the second signal is determined according to scheduling of the communication device.

In some embodiments, the transmission manner of the second signal includes at least one of:
a starting transmission time of the second signal, a duration of the second signal, a transmission power of the second signal, or spatial information of the second signal.

Optionally, in some embodiments, the above communication unit may be a communication interface or a transceiver, or may be an input/output interface of a communication chip or a system-on-chip.

It should be understood that, the communication device 400 according to the embodiments of the present application may correspond to the first device in the method embodiments of the present application, and the above and other operations and/or functions of various units in the communication device 400 are to implement corresponding processes of the first device in the method shown in FIGS. 9 to 12, which will not be repeated here for brevity.

FIG. 15 shows a schematic block diagram of a communication device 500 according to embodiments of the present application. As shown in FIG. 15, the communication device 500 includes:
a communication unit 510, configured to receive a first signal transmitted by the first device, where the first signal is used for the communication device to perform power harvesting and/or for the communication device to perform back scattering, and the first signal is a signal predetermined to be transmitted.

In some embodiments, the communication unit 510 is further configured to:
receive a first frame transmitted by the first device, where the first frame is used for carrying the first signal.

In some embodiments, the first frame is a frame transmitted periodically.

In some embodiments, the first frame is a beacon frame.

In some embodiments, the first signal is transmitted periodically.

In some embodiments, a transmission period of the first signal and/or a duration of the first signal within a period is predefined; or
the transmission period of the first signal and/or the duration of the first signal within a period is configured by a network device; or
the transmission period of the first signal and/or the duration of the first signal within a period is configured by the first device.

In some embodiments, the communication unit 510 is further configured to:
receive first indication information transmitted by the first device, where the first indication information is used for indicating period information of the first signal and/or duration information of the first signal within a period.

In some embodiments, the first indication information is carried in the first signal.

In some embodiments, the first signal is transmitted based on at least one piece of spatial information.

In some embodiments, the first signal is transmitted based on multiple pieces of spatial information within a period.

In some embodiments, the communication unit 510 is further configured to:
receive second indication information transmitted by the first device, where the second indication information is used for indicating spatial information of the first signal.

In some embodiments, the second indication information is carried in the first signal.

In some embodiments, the communication unit 510 is further configured to:
transmit first request information to the first device, where the first request information is used for requesting the first device to transmit a target signal, and the target signal is used for the communication device to perform power harvesting and/or for the communication device to perform back scattering.

In some embodiments, the first request information includes at least one of:
a time length of the target signal requested to be transmitted, a transmission period of the target signal requested to be transmitted, a strength of the target signal requested to be transmitted, spatial information of the target signal requested to be transmitted, a power harvesting capability of the communication device, a type of a service to be transmitted by the communication device, a duration of the service to be transmitted by the communication device, a data amount of the service to be transmitted by the communication device, or third indication information, where the third indication information is used for indicating that the communication device requests the first device to transmit the target signal.

In some embodiments, the communication unit 510 is further configured to:
receive a second signal transmitted by the first device, where the second signal is used for the communication device to perform power harvesting and/or for the communication device to perform back scattering.

In some embodiments, the second signal is transmitted based on the first request information of the communication device.

In some embodiments, the second signal is transmitted periodically, or the second signal is transmitted aperiodically.

In some embodiments, a transmission period of the second signal is less than a transmission period of the first signal transmitted by the first device; and/or
a duration of the second signal is greater than a duration of the first signal transmitted by the first device.

In some embodiments, a transmission manner of the second signal is determined by the first device.

In some embodiments, the transmission manner of the second signal is determined according to the first request information of the communication device; or
the transmission manner of the second signal is determined according to scheduling of the first device.

In some embodiments, the transmission manner of the second signal includes at least one of:
a starting transmission time of the second signal, a duration of the second signal, a transmission power of the second signal, or spatial information of the second signal.

Optionally, in some embodiments, the above communication unit may be a communication interface or a transceiver, or may be an input/output interface of a communication chip or a system-on-chip.

It should be understood that, the communication device 500 according to the embodiments of the present application may correspond to the second device in the method embodiments of the present application, and the above and other operations and/or functions of various units in the communication device 500 are to implement corresponding processes of the second device in the method 200 shown in FIGS. 9 to 12, which will not be repeated here for brevity.

FIG. 16 shows a schematic block diagram of a communication device 600 according to embodiments of the present application. As shown in FIG. 16, the communication device 600 includes:
a communication unit 610, configured to transmit first request information to the first device, where the first request information is used for requesting the first device to transmit a target signal, and the target signal is used for the communication device to perform power harvesting and/or for the communication device to perform back scattering.

In some embodiments, the first request information includes at least one of:
a time length of the target signal requested to be transmitted, a transmission period of the target signal requested to be transmitted, a strength of the target signal requested to be transmitted, spatial information of the target signal requested to be transmitted, a power harvesting capability of the communication device, a type of a service to be transmitted by the communication device, a duration of the service to be transmitted by the communication device, a data amount of the service to be transmitted by the communication device, or third indication information, where the third indication information is used for indicating that the communication device requests the first device to transmit the target signal.

In some embodiments, the communication unit 610 is further configured to:
receive a second signal transmitted by the first device, where the second signal is used for the communication device to perform power harvesting and/or for the communication device to perform back scattering.

In some embodiments, the second signal is transmitted periodically, or the second signal is transmitted aperiodically.

In some embodiments, the second signal is transmitted based on the first request information.

In some embodiments, the communication unit 610 is further configured to:
receive a first signal transmitted by the first device, where the first signal is used for the communication device to perform power harvesting and/or for the communication device to perform back scattering, and the first signal is a signal predetermined to be transmitted.

In some embodiments, the communication unit 610 is further configured to:
receive a first frame transmitted by the first device, where the first frame is used for carrying the first signal.

In some embodiments, the first frame is a frame transmitted periodically.

In some embodiments, the first frame is a beacon frame.

In some embodiments, the first signal is transmitted periodically.

In some embodiments, a transmission period of the first signal and/or a duration of the first signal within a period is predefined; or
the transmission period of the first signal and/or the duration of the first signal within a period is configured by the first device; or
the transmission period of the first signal and/or the duration of the first signal within a period is configured by a network device.

In some embodiments, the transmission period of the first signal and/or the duration of the first signal within a period is configured by the first signal.

In some embodiments, the first signal is transmitted based on at least one piece of spatial information.

In some embodiments, the first signal is transmitted periodically, and the first signal is transmitted based on multiple pieces of spatial information within a period.

In some embodiments, the communication unit 610 is further configured to:
receive second indication information transmitted by the first device, where the second indication information is used for indicating spatial information of the first signal.

In some embodiments, the second indication information is carried in the first signal.

In some embodiments, a transmission period of the first signal is greater than a transmission period of the second signal transmitted by the first device; and/or
a duration of the first signal is less than a duration of the second signal transmitted by the first device.

Optionally, in some embodiments, the above communication unit may be a communication interface or a transceiver, or may be an input/output interface of a communication chip or a system-on-chip.

It should be understood that, the communication device 600 according to the embodiments of the present application may correspond to the second device in the method embodiments of the present application, and the above and other operations and/or functions of various units in the communication device 600 are to implement corresponding processes of the second device in the method 300 shown in FIG. 13, which will not be repeated here for brevity.

FIG. 17 shows a schematic block diagram of a communication device 700 according to embodiments of the present application. As shown in FIG. 17, the communication device 700 includes:
a communication unit 710, configured to receive first request information transmitted by the second device, where the first request information is used for requesting the communication device to transmit a target signal, and the target signal is used for the second device to perform power harvesting and/or for the second device to perform back scattering.

In some embodiments, the first request information includes at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, where the third indication information is used for indicating that the second device requests the communication device to transmit the target signal.

In some embodiments, the communication unit 710 is further configured to:
transmit a second signal to the second device, where the second signal is used for the second device to perform power harvesting and/or for the second device to perform back scattering.

In some embodiments, the second signal is transmitted periodically, or the second signal is transmitted aperiodically.

In some embodiments, the second signal is transmitted based on the first request information.

In some embodiments, the communication unit 710 is further configured to:
transmit a first signal to the second device, where the first signal is used for the second device to perform power harvesting and/or for the second device to perform back scattering, and the first signal is a signal predetermined to be transmitted.

In some embodiments, the communication unit 710 is further configured to:
transmit a first frame to the second device, where the first frame is used for carrying the first signal.

In some embodiments, the first frame is a frame transmitted periodically.

In some embodiments, the first frame is a beacon frame.

In some embodiments, the first signal is transmitted periodically.

In some embodiments, a transmission period of the first signal and/or a duration of the first signal within a period is predefined; or
the transmission period of the first signal and/or the duration of the first signal within a period is configured by a network device.

In some embodiments, the communication unit 710 is further configured to:
transmit first indication information to the second device, where the first indication information is used for indicating the transmission period of the first signal and/or the duration of the first signal within a period.

In some embodiments, the first indication information is carried in the first signal.

In some embodiments, the first signal is transmitted based on at least one piece of spatial information.

In some embodiments, the first signal is transmitted based on multiple pieces of spatial information within a period.

In some embodiments, the communication unit 710 is further configured to:
receive second indication information transmitted by the communication device, where the second indication information is used for indicating spatial information of the first signal.

In some embodiments, the second indication information is carried in the first signal.

In some embodiments, a transmission period of the first signal is greater than a transmission period of the second signal transmitted by the communication device; and/or
a duration of the first signal is less than a duration of the second signal transmitted by the communication device.

Optionally, in some embodiments, the above communication unit may be a communication interface or a transceiver, or may be an input/output interface of a communication chip or a system-on-chip.

It should be understood that, the communication device 700 according to the embodiments of the present application may correspond to the second device in the method embodiments of the present application, and the above and other operations and/or functions of various units in the communication device 500 are to implement corresponding processes of the second device in the method 200 shown in FIGS. 9 to 12, which will not be repeated here for brevity.

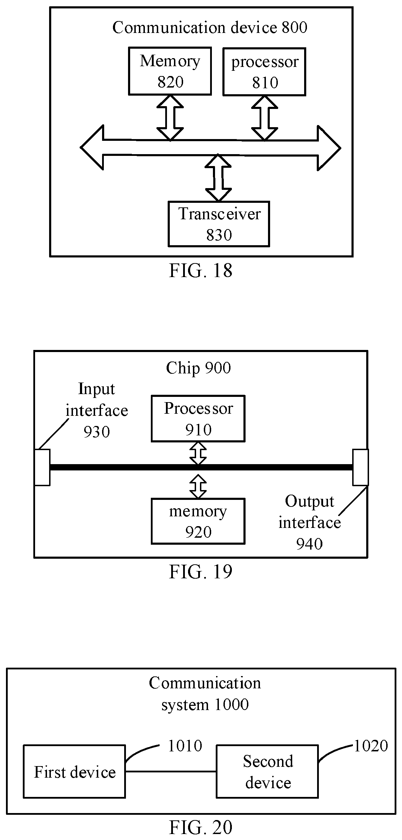

FIG. 18 is a schematic structural diagram of a communication device 800 according to embodiments of the present application. The communication device 800 shown in FIG. 18 includes a processor 810 that can invoke and run a computer program from a memory to implement the method in the embodiments of the present application.

Optionally, as shown in FIG. 40, the communication device 800 may further include a memory 820. The processor 810 can invoke and run a computer program from the memory 820 to implement the method in the embodiments of the present application.

The memory 820 may be a separate device independent of the processor 810 or may be integrated into the processor 810.

Optionally, as shown in FIG. 18, the communication device 800 may further include a transceiver 830, and the processor 810 may control the transceiver 830 to communicate with other devices. Specifically, the processor 810 may control the transceiver 830 to transmit information or data to other devices, or receive information or data transmitted by other devices.

The transceiver 830 may include a transmitter and a receiver. The transceiver 830 may further include antennas, and the number of antennas may be one or more.

Optionally, the communication device 800 may specifically be the first device in the embodiments of the present application, and the communication device 800 may implement corresponding processes implemented by the first device in various methods in the embodiments of the present application, which will not be repeated here for brevity.

Optionally, the communication device 800 may specifically be the second device in the embodiments of the present application, and the communication device 800 may implement corresponding processes implemented by the second device in various methods in the embodiments of the present application, which will not be repeated here for brevity.

FIG. 19 is a schematic structural diagram of a chip according to embodiments of the present application. The chip 900 shown in FIG. 19 includes a processor 910, and the processor 910 can invoke and run a computer program from a memory to implement the method in the embodiments of the present application.

Optionally, as shown in FIG. 19, the chip 900 may further include a memory 920. The processor 910 can invoke and run a computer program from the memory 920 to implement the method in the embodiments of the present application.

The memory 920 may be a separate device independent of the processor 910 or may be integrated into the processor 910.

Optionally, the chip 900 may further include an input interface 930. The processor 910 may control the input interface 930 to communicate with other devices or chips. Specifically, the processor 910 may control the input interface 930 to obtain information or data transmitted by other devices or chips.

Optionally, the chip 900 may further include an output interface 940. The processor 910 may control the output interface 940 to communicate with other devices or chips. Specifically, the processor 910 may control the output interface 940 to output information or data to other devices or chips.

Optionally, the chip may be applied to the first device in the embodiments of the present application, and the chip may implement corresponding processes implemented by the first device in various methods in the embodiments of the present application, which will not be repeated here for brevity.

Optionally, the chip may be applied to the second device in the embodiments of the present application, and the chip may implement corresponding processes implemented by the second device in various methods in the embodiments of the present application, which will not be repeated here for brevity.

It should be understood that the chip mentioned in the embodiments of the present application may also be referred to as a system-level chip, a system chip, a chip system or a system-on-chip.

FIG. 20 is a schematic block diagram of a communication system 1000 according to embodiments of the present application. As shown in FIG. 20, the communication system 1000 includes a first device 1010 and a second device 1020.

The first device 1010 may be used to implement the corresponding functions implemented by the first device in the above methods, and the second device 1020 may be used to implement the corresponding functions implemented by the second device in the above methods, which will not be repeated here for brevity.

Optionally, the communication system may be a cellular communication system or a non-cellular communication system, e.g., WIFI system, Bluetooth system, or Zigbee system.

It should be understood that the processor in the embodiments of the present application may be an integrated circuit chip with a capability for processing signals. In an implementation process, various steps of the above method embodiments may be completed by an integrated logic circuit of hardware in a processor or instructions in a software form. The above processor may be a general-purpose processor, a digital signal processor (DSP), an application specific integrated circuit (ASIC), a field programmable gate array (FPGA) or another programmable logic device, a discrete gate or transistor logic device, or a discrete hardware component. The processor may implement various methods, steps and logical block diagrams disclosed in the embodiments of the present application. The general-purpose processor may be a microprocessor, or the processor may be any conventional processor. The steps of the methods disclosed in combination with the embodiments of the present application may be directly embodied by execution of a hardware decoding processor, or by execution of a combination of hardware and software modules in a decoding processor. The software module may be located in a storage medium commonly used in the art, such as a random access memory, a flash memory, a read-only memory, a programmable read-only memory or an electrically erasable programmable memory, or a register. The storage medium is located in a memory (memories), and the processor reads information in the memory (memories) and completes the steps of the above methods in combination with hardware of the processor.

It can be understood that, the memory in the embodiments of the present application may be a volatile memory or a non-volatile memory, or the memories may include both volatile and non-volatile memories. The non-volatile memory may be a read-only memory (ROM), a programmable (PROM), an erasable PROM (EPROM), an electrically EPROM (EEPROM) or a flash memory. The volatile memory may be a random access memory (RAM), which is used as an external cache. As an example but not as a limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link (Synchlink) DRAM (SLDRAM), and a direct rambus RAM (DR RAM). It should be noted that the memories in the system and the methods described herein are intended to include, but are not limited to, these and any other suitable types of memories.

It will be appreciated that the above memories are exemplary but are not limiting illustration. For example, the memory in embodiments of the present application may also be a SRAM, a DRAM, a SDRAM, a DDR SDRAM, a ESDRAM, a SLDRAM, or a DR RAM. That is, the memories in the embodiments of the present application are intended to include, but are not limited to, these and any other suitable types of memories.

The embodiments of the present application further provide a computer-readable storage medium for storing a computer program.

Optionally, the computer-readable storage medium may be applied to the first device in the embodiments of the present application, and the computer program enables a computer to perform the corresponding processes implemented by the first device in the various methods in the embodiments of the present application, which will not be repeated here for brevity.

Optionally, the computer-readable storage medium may be applied to the second device in the embodiments of the present application, and the computer program enables a computer to perform the corresponding processes implemented by the second device in various methods in the embodiments of the present application, which will not be repeated here for brevity.

The embodiments of the present application further provide a computer program product including computer program instructions.

Optionally, the computer program product may be applied to the first device in the embodiments of the present application, and the computer program instructions enable a computer to perform the corresponding processes implemented by the first device in the various methods in the embodiments of the present application, which will not be repeated here for brevity.

Optionally, the computer program product may be applied to the second device in the embodiments of the present application, and the computer program instructions enable a computer to perform the corresponding processes implemented by the second device in various methods in the embodiments of the present application, which will not be repeated here for brevity.

The embodiments of the present application further provide a computer program.

Optionally, the computer program may be applied to the first device in the embodiments of the present application, and the computer program, when run on a computer, enables the computer to perform the corresponding processes implemented by the first device in various methods in the embodiments of the present application, which will not be repeated here for brevity.

Optionally, the computer program may be applied to the second device in the embodiments of the present application, and the computer program, when run on a computer, enables the computer to perform the corresponding processes implemented by the second device in various methods in the embodiments of the present application, which will not be repeated here for brevity.

Those ordinary skilled in the art will recognize that units and algorithm steps of various examples described in combination with the embodiments disclosed herein can be implemented in electronic hardware or in a combination of computer software and electronic hardware. Whether these functions are implemented by way of hardware or software depends on a specific application and a design constraint of a technical solution. A skilled person may use different methods to implement the described functions for each specific application, but such implementation should not be considered beyond the scope of the present application.

It may be clearly understood by those skilled in the art that, for convenience and brevity of the description, the specific working processes of the system, apparatus and unit described above may refer to the corresponding processes in the above method embodiments, which will not be repeated here.

In the several embodiments provided in the application, it should be understood that the disclosed system, apparatus, and method may be implemented in other ways. For example, the apparatus embodiments described above are only illustrative. For example, division of the units is only a logical function division, and there may be other division manners in actual implementation. For example, multiple units or components may be combined or integrated into another system, or some features may be ignored or not executed. In addition, coupling or direct coupling or communication connection shown or discussed between each other may be indirect coupling or communication connection via some interfaces, apparatuses, or units, which may be electrical, mechanical, or in other forms.

The units described as separate components may be or may be not physically separated, and the components shown as units may be or may be not physical units (that is, they may be located in one place or may be distributed on multiple network units). Some or all of units may be selected according to actual needs to achieve purposes of solutions of the embodiments.

In addition, various functional units in various embodiments of the present application may be integrated in one processing unit, or various units may be physically present separately, or two or more units may be integrated in one unit.

The functions, if implemented in a form of software functional units and sold or used as an independent product, may be stored in a computer-readable storage medium. With such understanding, the technical solutions of the present application may be embodied in the form of a software product in essence, or a part of the technical solutions that contributes to the prior art or a part of the technical solutions may be embodied in the form of a software product. The computer software product is stored in one storage medium including several instructions for enabling a computer device (which may be a personal computer, a server, or a network device) to perform all or some of the steps of the methods described in various embodiments of the present application. The aforementioned storage medium includes a U disk, a mobile hard disk, a read-only memory (ROM), a random access memory (RAM), a magnetic disk, an optical disk, or any medium capable of storing program codes.

The foregoing descriptions are merely specific implementations of the present disclosure, but the protection scope of the present application is not limited thereto. Variations or replacements that any person skilled in the art could readily conceive of within the technical scope disclosed in the present application shall be included in the protection scope of the present application. Therefore, the protection scope of the present application should be subject to the protection scope of the claims.

## Claims

1. A wireless communication method, comprising:
transmitting, by a first device, a first signal to a second device, wherein the first signal is used for the second device to perform power harvesting and/or for the second device to perform back scattering, and the first signal is a signal predetermined to be transmitted.

2. The method according to claim 1, wherein the first signal is dedicated to the second device for power harvesting and/or to the second device for back scattering.

3. The method according to claim 1 or 2, wherein transmitting, by the first device, the first signal to the second device comprises:
transmitting, by the first device, a first frame to the second device, wherein the first frame is used for carrying the first signal.

4. The method according to claim 3, wherein the first frame is a frame transmitted periodically.

5. The method according to claim 3 or 4, wherein the first frame is a beacon frame.

6. The method according to any one of claims 1 to 5, wherein the first signal is transmitted periodically.

7. The method according to claim 6, wherein
a transmission period of the first signal and/or a duration of the first signal within a period is predefined; or
the transmission period of the first signal and/or the duration of the first signal within the period is configured by a network device.

8. The method according to claim 6, further comprising:
transmitting, by the first device, first indication information to the second device, wherein the first indication information is used for indicating period information of the first signal and/or duration information of the first signal within a period.

9. The method according to claim 8, wherein the first indication information is carried in the first signal.

10. The method according to any one of claims 1 to 9, wherein the first signal is transmitted based on at least one piece of spatial information.

11. The method according to claim 10, wherein the first signal is transmitted periodically, and the first signal is transmitted based on a plurality of pieces of spatial information within a period.

12. The method according to claim 10 or 11, further comprising:
transmitting, by the first device, second indication information to the second device, wherein the second indication information is used for indicating spatial information of the first signal.

13. The method according to claim 12, wherein the second indication information is carried in the first signal.

14. The method according to any one of claims 1 to 13, further comprising:
receiving, by the first device, first request information transmitted by the second device, wherein the first request information is used for requesting the first device to transmit a target signal, and the target signal is used for the second device to perform power harvesting and/or for the second device to perform back scattering.

15. The method according to claim 14, wherein the first request information comprises at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, wherein the third indication information is used for indicating that the second device requests the first device to transmit the target signal.

16. The method according to any one of claims 1 to 15, further comprising:
transmitting, by the first device, a second signal to the second device, wherein the second signal is used for the second device to perform power harvesting and/or for the second device to perform back scattering.

17. The method according to claim 16, wherein the second signal is transmitted based on first request information of the second device; the first request information is used for requesting the first device to transmit a target signal, and the target signal is used for the second device to perform power harvesting and/or for the second device to perform back scattering.

18. The method according to claim 16 or 17, wherein
the second signal is transmitted periodically, or the second signal is transmitted aperiodically.

19. The method according to any one of claims 16 to 18, wherein
a transmission period of the second signal is less than a transmission period of the first signal; and/or a duration of the second signal is greater than a duration of the first signal.

20. The method according to any one of claims 16 to 19, wherein a transmission manner of the second signal is determined by the first device.

21. The method according to claim 20, wherein
the transmission manner of the second signal is determined according to first request information of the second device; or
the transmission manner of the second signal is determined according to scheduling of the first device.

22. The method according to claim 20 or 21, wherein the transmission manner of the second signal comprises at least one of:
a starting transmission time of the second signal, a duration of the second signal, a transmission power of the second signal, or spatial information of the second signal.

23. A wireless communication method, comprising:
receiving, by a second device, a first signal transmitted by a first device, wherein the first signal is used for the second device to perform power harvesting and/or for the second device to perform back scattering, and the first signal is a signal predetermined to be transmitted.

24. The method according to claim 23, wherein receiving, by the second device, the first signal transmitted by the first device comprises:
receiving, by the second device, a first frame transmitted by the first device, wherein the first frame is used for carrying the first signal.

25. The method according to claim 24, wherein the first frame is a frame transmitted periodically.

26. The method according to claim 25, wherein the first frame is a beacon frame.

27. The method according to any one of claims 23 to 26, wherein the first signal is transmitted periodically.

28. The method according to claim 27, wherein
a transmission period of the first signal and/or a duration of the first signal within a period is predefined; or
the transmission period of the first signal and/or the duration of the first signal within the period is configured by a network device; or
the transmission period of the first signal and/or the duration of the first signal within the period is configured by the first device.

29. The method according to claim 27 or 28, further comprising:
receiving, by the second device, first indication information transmitted by the first device, wherein the first indication information is used for indicating period information of the first signal and/or duration information of the first signal within a period.

30. The method according to claim 29, wherein the first indication information is carried in the first signal.

31. The method according to any one of claims 23 to 30, wherein the first signal is transmitted based on at least one piece of spatial information.

32. The method according to claim 31, wherein the first signal is transmitted periodically, and the first signal is transmitted based on a plurality of pieces of spatial information within a period.

33. The method according to any one of claims 23 to 32, further comprising:
receiving, by the second device, second indication information transmitted by the first device, wherein the second indication information is used for indicating spatial information of the first signal.

34. The method according to claim 33, wherein the second indication information is carried in the first signal.

35. The method according to any one of claims 23 to 34, further comprising:
transmitting, by the second device, first request information to the first device, wherein the first request information is used for requesting the first device to transmit a target signal, and the target signal is used for the second device to perform power harvesting and/or for the second device to perform back scattering.

36. The method according to claim 35, wherein the first request information comprises at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, wherein the third indication information is used for indicating that the second device requests the first device to transmit the target signal.

37. The method according to any one of claims 23 to 36, further comprising:
receiving, by the second device, a second signal transmitted by the first device, wherein the second signal is used for the second device to perform power harvesting and/or for the second device to perform back scattering.

38. The method according to claim 37, wherein the second signal is transmitted based on first request information of the second device.

39. The method according to claim 37 or 38, wherein
the second signal is transmitted periodically, or the second signal is transmitted aperiodically.

40. The method according to any one of claims 37 to 39, wherein
a transmission period of the second signal is less than a transmission period of the first signal transmitted by the first device; and/or
a duration of the second signal is greater than a duration of the first signal transmitted by the first device.

41. The method according to any one of claims 37 to 40, wherein
a transmission manner of the second signal is determined according to first request information of the second device; or
the transmission manner of the second signal is determined according to scheduling of the first device.

42. The method according to claim 41, wherein the transmission manner of the second signal comprises at least one of:
a starting transmission time of the second signal, a duration of the second signal, a transmission power of the second signal, or spatial information of the second signal.

43. A wireless communication method, comprising:
transmitting, by a second device, first request information to a first device, wherein the first request information is used for requesting the first device to transmit a target signal, and the target signal is used for the second device to perform power harvesting and/or for the second device to perform back scattering.

44. The method according to claim 43, wherein the first request information comprises at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, wherein the third indication information is used for indicating that the second device requests the first device to transmit the target signal.

45. The method according to claim 43 or 44, further comprising:
receiving, by the second device, a second signal transmitted by the first device, wherein the second signal is used for the second device to perform power harvesting and/or for the second device to perform back scattering.

46. The method according to claim 45, wherein
the second signal is transmitted periodically, or the second signal is transmitted aperiodically.

47. The method according to claim 46, wherein the second signal is transmitted based on the first request information.

48. The method according to any one of claims 43 to 47, further comprising:
receiving, by the second device, a first signal transmitted by the first device, wherein the first signal is used for the second device to perform power harvesting and/or for the second device to perform back scattering, and the first signal is a signal predetermined to be transmitted.

49. The method according to claim 48, wherein receiving, by the second device, the first signal transmitted by the first device comprises:
receiving, by the second device, a first frame transmitted by the first device, wherein the first frame is used for carrying the first signal.

50. The method according to claim 49, wherein the first frame is a frame transmitted periodically.

51. The method according to claim 50, wherein the first frame is a beacon frame.

52. The method according to any one of claims 48 to 51, wherein the first signal is transmitted periodically.

53. The method according to claim 52, wherein
a transmission period of the first signal and/or a duration of the first signal within a period is predefined; or
the transmission period of the first signal and/or the duration of the first signal within the period is configured by the first device; or
the transmission period of the first signal and/or the duration of the first signal within the period is configured by a network device.

54. The method according to claim 53, wherein the transmission period of the first signal and/or the duration of the first signal within the period is configured by the first signal.

55. The method according to any one of claims 48 to 54, wherein the first signal is transmitted based on at least one piece of spatial information.

56. The method according to claim 55, wherein the first signal is transmitted periodically, and the first signal is transmitted based on a plurality of pieces of spatial information within a period.

57. The method according to claim 55 or 56, further comprising:
receiving, by the second device, second indication information transmitted by the first device, wherein the second indication information is used for indicating spatial information of the first signal.

58. The method according to claim 57, wherein the second indication information is carried in the first signal.

59. The method according to any one of claims 48 to 58, wherein
a transmission period of the first signal is greater than a transmission period of a second signal transmitted by the first device; and/or
a duration of the first signal is less than a duration of the second signal transmitted by the first device.

60. A wireless communication method, comprising:
receiving, by a first device, first request information transmitted by a second device, wherein the first request information is used for requesting the first device to transmit a target signal, and the target signal is used for the second device to perform power harvesting and/or for the second device to perform back scattering.

61. The method according to claim 60, wherein the first request information comprises at least one of:
a time length of the target signal requested to be transmitted, a transmission period of the target signal requested to be transmitted, a strength of the target signal requested to be transmitted, spatial information of the target signal requested to be transmitted, a power harvesting capability of the second device, a type of a service to be transmitted by the second device, a duration of the service to be transmitted by the second device, a data amount of the service to be transmitted by the second device, or third indication information, wherein the third indication information is used for indicating that the second device requests the first device to transmit the target signal.

62. The method according to claim 60 or 61, further comprising:
transmitting, by the first device, a second signal to the second device, wherein the second signal is used for the second device to perform power harvesting and/or for the second device to perform back scattering.

63. The method according to claim 62, wherein
the second signal is transmitted periodically, or the second signal is transmitted aperiodically.

64. The method according to claim 63, wherein the second signal is transmitted based on the first request information.

65. The method according to any one of claims 60 to 64, further comprising:
transmitting, by the first device, a first signal to the second device, wherein the first signal is used for the second device to perform power harvesting and/or for the second device to perform back scattering, and the first signal is a signal predetermined to be transmitted.

66. The method according to claim 65, wherein transmitting, by the first device, the first signal to the second device comprises:
transmitting, by the first device, a first frame to the second device, wherein the first frame is used for carrying the first signal.

67. The method according to claim 66, wherein the first frame is a frame transmitted periodically.

68. The method according to claim 67, wherein the first frame is a beacon frame.

69. The method according to any one of claims 65 to 68, wherein the first signal is transmitted periodically.

70. The method according to claim 69, wherein
a transmission period of the first signal and/or a duration of the first signal within a period is predefined; or
the transmission period of the first signal and/or the duration of the first signal within the period is configured by a network device.

71. The method according to claim 70, further comprising:
transmitting, by the first device, first indication information to the second device, wherein the first indication information is used for indicating the transmission period of the first signal and/or the duration of the first signal within the period.

72. The method according to claim 71, wherein the first indication information is carried in the first signal.

73. The method according to any one of claims 65 to 72, wherein the first signal is transmitted based on at least one piece of spatial information.

74. The method according to claim 73, wherein the first signal is transmitted periodically, and the first signal is transmitted based on a plurality of pieces of spatial information within a period.

75. The method according to claim 73 or 74, further comprising:
receiving, by the second device, second indication information transmitted by the first device, wherein the second indication information is used for indicating spatial information of the first signal.

76. The method according to claim 75, wherein the second indication information is carried in the first signal.

77. The method according to any one of claims 65 to 76, wherein
a transmission period of the first signal is greater than a transmission period of a second signal transmitted by the first device; and/or
a duration of the first signal is less than a duration of the second signal transmitted by the first device.

78. A communication device, comprising:
a communication unit, configured to transmit a first signal to a second device, wherein the first signal is used for the second device to perform power harvesting and/or for the second device to perform back scattering, and the first signal is a signal predetermined to be transmitted.

79. A communication device, comprising:
a communication unit, configured to receive a first signal transmitted by a first device, wherein the first signal is used for the communication device to perform power harvesting and/or for the communication device to perform back scattering, and the first signal is a signal predetermined to be transmitted.

80. A communication device, comprising:
a communication unit, configured to transmit first request information to a first device, wherein the first request information is used for requesting the first device to transmit a target signal, and the target signal is used for the communication device to perform power harvesting and/or for the communication device to perform back scattering.

81. A communication device, comprising:
a communication unit, configured to receive first request information transmitted by a second device, wherein the first request information is used for requesting the communication device to transmit a target signal, and the target signal is used for the second device to perform power harvesting and/or for the second device to perform back scattering.

82. A communication device, comprising: a processor and a memory, wherein the memory is configured to store a computer program, and the processor is configured to invoke and run the computer program stored in the memory, so as to enable the communication device to perform the method according to any one of claims 1 to 22 or the method according to any one of claims 60 to 77.

83. A communication device, comprising: a processor and a memory, wherein the memory is configured to store a computer program, and the processor is configured to invoke and run the computer program stored in the memory, so as to enable the communication device to perform the method according to any one of claims 23 to 42 or the method according to any one of claims 43 to 59.
